(19) Europäisches Patentamt
European Patent Office
Office européen des brevets

(11) Veröffentlichungsnummer: **0 245 689**
**A2**

(12)

# EUROPÄISCHE PATENTANMELDUNG

(21) Anmeldenummer: **87106120.6**

(22) Anmeldetag: **28.04.87**

(51) Int. Cl.³: **B 41 M 5/26**
B 41 M 5/24, B 41 J 31/00
C 08 J 5/18, C 08 G 63/64

(30) Priorität: **10.05.86 DE 3615764**

(43) Veröffentlichungstag der Anmeldung:
**19.11.87 Patentblatt 87/47**

(84) Benannte Vertragsstaaten:
**DE FR GB IT**

(71) Anmelder: **BAYER AG**
**Konzernverwaltung RP Patentabteilung**
**D-5090 Leverkusen 1 Bayerwerk(DE)**

(72) Erfinder: **Serini, Volker, Dr.**
**Sebastian-Kneipp-Weg 2**
**D-4150 Krefeld(DE)**

(72) Erfinder: **Schulte, Bernhard, Dr.**
**Doppelfeldstrasse 15**
**D-4150 Krefeld(DE)**

(72) Erfinder: **Burkhardt, Claus, Dr.**
**Hasenheide 12**
**D-4150 Krefeld(DE)**

(72) Erfinder: **Freitag, Dieter, Dr.**
**Hasenheide 10**
**D-4150 Krefeld(DE)**

(72) Erfinder: **Hucks, Uwe, Dipl.-Ing.**
**Am Marienstift 30**
**D-4234 Alpen(DE)**

(72) Erfinder: **Waldenrath, Werner, Dipl.-Ing.**
**Maastrichter Strasse 40**
**D-5000 Köln(DE)**

(72) Erfinder: **Weber, Hans-Leo, Dipl.-Ing.**
**Dahlienweg 7**
**D-4049 Rommerskirchen 2(DE)**

(54) **Verwendung von Folien aus Polykondensaten.**

(57) Folien aus aromatischen Polyestern und aus aromatischen Polyestercarbonaten eignen sich hervorragend zur Herstellung von Schreibbändern, insbesondere für thermische und elektrothermische Aufzeichnungsverfahren.

EP 0 245 689 A2

BAYER AKTIENGESELLSCHAFT 5090 Leverkusen, Bayerwerk
Konzernverwaltung RP
Patentabteilung Pv/Kü-c

# Verwendung von Folien aus Polykondensaten

Gegenstand der Erfindung ist die Verwendung von Folien aus Polykondensaten für die Herstellung von Schreibbändern, dadurch gekennzeichnet, daß die Polykondensate 75-100 Mol-% bifunktionelle Struktureinheiten der Formeln (1) und gegebenenfalls (2)

(1) 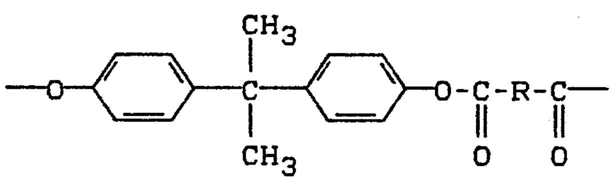

(2) 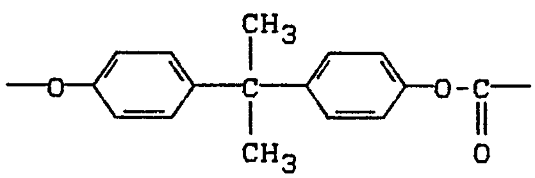

und 25-0 Mol-% bifunktionelle Struktureinheiten der Formeln (3) und gegebenenfalls (4)

(3) 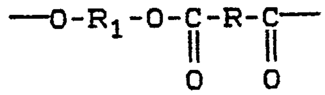

(4) 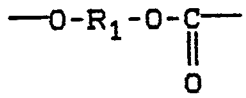

enthalten,

wobei die Säurereste -CO-R-CO- in den Formeln (1) und (3) 75-100 Mol-% Tere- und/oder Isophthalsäurereste und zu 25-0 Mol-% Reste anderer aromatischer Dicarbonsäuren und die Reste $-O-R_1-O-$ in den Formeln (3) und (4) Reste anderer Diphenole als die in den Formeln (1) und (2) enthaltenen Reste des 2,2-Bis-(4-hydroxyphenyl)-propans bedeuten,

und das Molverhältnis Estergruppen zu Carbonatgruppen in den Polykondensaten 100/0 bis 10/90 beträgt.

Dem Rest $-O-R_1-O-$ in den Formeln (3) und (4) liegen beispielsweise folgende Diphenole $HO-R_1-OH$ zugrunde:

Hydrochinon,
Resorcin,
Dihydroxydiphenyle,
Bis-(hydroxyphenyl)-alkane mit Ausnahme von Bisphenol-A,

Bis-(hydroxyphenyl)-cycloalkane,
Bis-(hydroxyphenyl)-sulfide,
Bis-(hydroxyphenyl)-ether,
Bis-(hydroxyphenyl)-ketone,
α,α'-Bis-(hydroxyphenyl)-diisopropylbenzole,

sowie deren kernhalogenierte und kernalkylierte Verbindungen. Diese und weitere geeignete Diphenole sind beispielsweise in der Monographie Hermann Schnell, Chemistry and Physics of Polycarbonates, New York, Interscience Publishers 1964, Polymer Reviews, Vol. 9, der Veröffentlichung V. Serini, D. Freitag, H. Vernaleken, Polycarbonate aus o,o,o',o'-tetramethylsubstituierten Bisphenolen, Angew. Makromol. Chem. 55 (1976) 175-189 und den Deutschen Offenlegungsschriften 2 063 050, 2 211 957, 2 615 038 und 2 248 817 beschrieben.

Bevorzugt liegen dem Rest $-O-R_1-O-$ folgende Diphenole $HO-R_1-OH$ zugrunde:

Hydrochinon,
Resorcin,
Bis-(4-hydroxydiphenyl),
Bis-(4-hydroxyphenyl)-methan,
2,2-Bis-(4-hydroxyphenyl)-butan,
1,1-Bis-(4-hydroxyphenyl)-cyclohexan,
Bis-(4-hydroxyphenyl)-sulfid,
Bis-(4-hydroxyphenyl)-ether,
Bis-(4-hydroxyphenyl)-keton,

α,α'-Bis-(4-hydroxyphenyl)-p-diisopropylbenzol,
2,2-Bis-(3,5-dimethyl-4-hydroxyphenyl)-propan,
2,2-Bis-(3,5-dimethyl-4-hydroxyphenyl)-methan,
2,2-Bis-(3,5-dimethyl-4-hydroxyphenyl)-butan,
2,2-Bis-(3,5-dibrom-4-hydroxyphenyl)-propan und
2,2-Bis-(3,5-dichlor-4-hydroxyphenyl)-propan.

Besonderes bevorzugte Diphenole $HO-R_1-OH$ sind

Hydrochinon,
Bis-(4-hydroxydiphenyl),
Bis-(4-hydroxydiphenyl)-sulfid,
Bis-(4-hydroxydiphenyl)-ether,
2,2-Bis-(3,5-dimethyl-4-hydroxyphenyl)-propan,
2,2-Bis-(3,5-dichlor-4-hydroxyphenyl)-propan und
2,2-Bis-(3,5-dibrom-4-hydroxyphenyl)-propan.

Andere aromatische Dicarbonsäuren als Tere- und Isophthalsäure, die den Säureresten -CO-R-CO- der Formeln (1) und (3) zugrundeliegen, sind beispielsweise

o-Phthalsäure,
Monochlorterephthalsäure,
2,5-Dichlorterephthalsäure,
Diphenylether-4,4'-dicarbonsäure,
Diphenylmethan-4,4'-dicarbonsäure,
Diphenyl-4,4'-dicarbonsäure,
Naphthalin-1,4-dicarbonsäure,
Naphthalin-1,8-dicarbonsäure.

Sowohl die Diphenole $HO-R_1-OH$ als auch die anderen aromatischen Dicarbonsäuren als Tere- und Isophthalsäure können einzeln oder als Gemische neben dem 2,2-Bis-(4-hydroxyphenyl)-propan und der Tere- und/oder Isophthalsäure eingesetzt werden.

Den erfindungsgemäß zu verwendenden Folien liegen Polykondensate zugrunde, die bevorzugt 10-0 Mol-% und besonders bevorzugt 0 Mol-% bifunktionelle Struktureinheiten der Formeln (3) und (4) aufweisen.

Den erfindungsgemäß zu verwendenden Folien liegen Polykondensate zugrunde, worin die Säurereste -CO-R-CObevorzugt zu 90-100 Mol-% und besonders bevorzugt zu 100 Mol-% aus Tere- und/oder Isophthalsäureeinheiten bestehen.

In den Polykondensaten, die den erfindungsgemäß zu verwendenden Folien zugrundeliegen, kann das Verhältnis Tere-/Isophthalsäure-Reste 100/0 bis 0/100 betragen.

Wenn das Molverhältnis Ester- zu Carbonatgruppen in den Polykondensaten, die den erfindungsgemäß zu verwendenden Folien zugrundeliegen, kleiner oder gleich 1/1 ist, ist das Verhältnis Terephthalsäure-/Isophthalsäure-Reste bevorzugt mindestens 10/90, besonders bevorzugt mindestens 40/60, ganz besonders bevorzugt mindestens 60/40, insbesondere mindestens 80/20 und speziell 100/0.

Wenn das Molverhältnis Ester- zu Carbonatgruppen in den Polykondensaten, die den erfindungsgemäß zu verwendenden Folien zugrundeliegen, größer als 1/1 ist, ist das Verhältnis Terephthalsäure-/Isophthalsäure-Reste bevorzugt 97/3 bis 3/97, besonders bevorzugt 93/7 bis 15/85, ganz besonders bevorzugt 80/20 bis 35/65 und insbesondere 70/30 bis 50/50.

Das Molverhältnis Ester- zu Carbonatgruppen beträgt in den Polykondensaten, die den erfindungsgemäß zu verwendenden Folien zugrundeliegen, bevorzugt 99/1 bis 10/90, besonders bevorzugt 98/2 bis 20/80, ganz besonders bevorzugt 97/3 bis 40/60, besser 95/5 bis 65/35 und insbesondere 90/10 bis 80/20.

Unter Polykondensaten, die den erfindungsgemäß zu verwendenden Folien zugrundeliegen, werden auch beliebige Mischungen von mindestens zwei Polykondensaten aus der Reihe der aromatischen Polycarbonate, Polyester und Polyestercarbonate verstanden, vorausgesetzt, sie genügen den eingangs gestellten Anforderungen an Art und Verhältnis der bivalenten Struktureinheiten.

So können beispielsweise Mischungen aus aromatischen Polycarbonaten und aromatischen Polyestern, Mischungen aus aromatischen Polyestern und aromatischen Polyestercarbonaten, Mischungen aus aromatischen Polycarbonaten und aromatischen Polyestercarbonaten sowie Mischungen aus aromatischen Polyestercarbonaten unterschiedlichen Polycarbonatgehaltes eingesetzt werden, wobei die Bevorzugung in

der obigen Reihenfolge größer wird. Am stärksten bevorzugt sind jedoch Polykondensate, deren Zusammensetzung durch die Synthese festgelegt ist, die also nicht durch nachträgliches Mischen erhältlich sind.

Die erfindungsgemäß zu verwendenden Folien können sowohl Extrusionsfolien als auch Gießfolien sein. Die Verwendung von Gießfolien jedoch stellt eine bevorzugte Ausführungsform dieser Erfindung dar. Unter Extrusionsfolien werden Folien verstanden, die aus der Schmelze des Polykondensats gezogen werden, z.B. über Schlitzdüsen oder auch über Ringdüsen, wie beim Blasformen. Unter Gießfolien werden Folien verstanden, die hergestellt werden, indem eine Polykondensat-Lösung auf eine Unterlage vergossen und das Lösemittel abgedampft wird.

Die Polykondensate, die für die erfindungsgemäß verwendbaren Extrusionsfolien einsetzbar sind, weisen relative Viskositäten von 1,20-1,80, bevorzugt von 1,25-1,60, besonders bevorzugt von 1,30-1,45 auf (gemessen bei c=5 g/l und 25°C in Phenol/o-Dichlorbenzol 1/1 Gewichtsteile).

Die Polykondensate, die für die erfindungsgemäß verwendbaren Gießfolien einsetzbar sind, weisen relative Viskositäten von 1,20-5,0, bevorzugt von 1,25-4,0, besonders bevorzugt von 1,50-3,5, insbesondere von 1,7-3,0 und besonders von 2,0-2,5 auf (gemessen bei c=5 g/l und 25°C in Methylenchlorid).

Während die erfindungsgemäß verwendbaren Extrusionsfolien Dicken von 0,5-1000 µm, bevorzugt 2-600 µm, besonders bevorzugt von 5-300 µm und ganz besonders bevorzugt von 10-200 µm aufweisen, haben die Gießfolien Dicken von 0,1-800 µm, bevorzugt von 1,0-600 µm, besonders bevorzugt von 2,0-400 µm und ganz besonders bevorzugt von 3,0-200 µm.

Die Herstellung der Polykondensate, die zur Herstellung der erfindungsgemäß zu verwendenden Folien einsetzbar sind, kann nach verschiedenen Verfahren erfolgen, so z.B. nach verschiedenen Schmelzumesterungsverfahren, nach Herstellungsverfahren in homogener Lösung und nach dem Zweiphasengrenzflächenverfahren. Dabei können als Monomere unterschiedliche Abkömmlinge der aromatischen Dihydroxyverbindungen und aromatischen Dicarbonsäuren und der Kohlensäure eingesetzt werden, so z.B. Bischlorkohlensäureester, Bissäurechloride, Phosgen, Dicarbonsäurediphenylester, Diphenylcarbonat und andere.

Bevorzugt werden die für die erfindungsgemäß zu verwendenden Folien einsetzbaren Polykondensate nach einem Zweiphasengrenzflächenverfahren hergestellt. So kann beispielsweise ein aromatisches Polyestercarbonat aus 2,2-Bis-(4-hydroxyphenyl)-propan und gegebenenfalls weiteren aromatischen Dihydroxyverbindungen, einer Mischung aus Tere-und Isophthalsäuredichloriden und gegebenenfalls weiteren Dicarbonsäuredichloriden, sowie Phosgen als Monomer hergestellt werden. Dazu werden beispielsweise Dihydroxyverbindungen und ein Phenol als Kettenbegrenzer in wäßrigem Alkali gelöst. Zu dieser Lösung werden ein oder mehrere organische Lösemittel, z.B. halogenierte Kohlenwasserstoffe, zugegeben und unter Rühren die Dicarbonsäurechloride zugegeben, gelöst in dem genannten Lösungsmittel. Im Anschluß daran wird unter Rühren die

benötigte Menge Phosgen zugesetzt. Dann wird ein tertiäres Amin als Katalysator zugegeben und noch einige Zeit gerührt. Danach kann das gebildete Polyestercarbonat aus der abzutrennenden organischen Phase isoliert werden.

Als Kettenbegrenzer können eine ganze Reihe von einkondensierbaren monofunktionellen Verbindungen bzw. deren Abkömmlinge eingesetzt werden, so Phenole, wie z.B. Phenol, o-, m-, p-Kresol, p-tert.-Butylphenol, p-Isooctylphenol, Carbonsäuren, wie z.B. Benzoesäure, sekundäre Amine, wie z.B. Methylanilin, sowie weitere, wie sie in der Literatur aromatischer Polyester und Polyestercarbonate beschrieben sind. Abkömmlinge der phenolischen Verbindungen sind beispielsweise Chlorkohlensäureester und Phenylcarbonate, Abkömmlinge der Säuren beispielsweise Säurechloride und Phenylester. Bevorzugt werden die Phenole, insbesondere das p-Isooctylphenol.

Als Katalysatoren werden im allgemeinen tertiäre Amine, wie z.B. Triethylamin, Tripropylamin, Tributylamin und N-Ethylpiperidin, oder Phasentransferkatalysatoren, wie z.B. quaternäre Ammoniumverbindungen oder Phosphoniumverbindungen, eingesetzt. Diese und weitere Katalysatoren sind ausführlich in der Literatur für die Herstellung von aromatischen Polyestern und Polyestercarbonaten beschrieben.

Als Lösemittel werden im allgemeinen chlorierte Kohlenwasserstoffe aliphatischer und aromatischer Natur und Mischungen daraus eingesetzt, wie z.B. Methylenchlorid und Methylenchlorid/Chlorbenzol-Mischungen; bevorzugt wird Methylenchlorid verwendet.

Während der Kondensation wird der pH-Wert im allgemeinen auf über 7, insbesondere zwischen etwa 8 und 14 gehalten. Die Temperatur liegt im allgemeinen unter dem Siedepunkt der organischen Lösungsmittel, bevorzugt bei etwa 10-50° C. Das Verfahren kann vielfältig variiert werden, beispielsweise durch Änderung der Reihenfolge und des Zeitpunktes der Zugabe von Reaktanden und Katalysator, durch Einsatz von mehr als einem Katalysator, durch Änderung des pH-Wertes, der Temperatur, der Rührbedingungen und anderes mehr.

Die erfindungsgemäß zu verwendenden Polykondensate können die Ester- und die Carbonateinheiten mehr oder weniger blockartig oder statistisch verteilt enthalten, bedingt durch die Art des Herstellungsverfahrens. Sie können außerdem verzweigt sein, wenn in der Polykondensationsreaktion verzweigende polyfunktionelle Verbindungen mit eingebaut werden. Solche polyfunktionellen Verbindungen sind vielfältig in der Polyester- und Polyestercarbonatliteratur beschrieben.

Die Herstellung der erfindungsgemäß zu verwendenden Polykondensate durch Mischung eines oder mehrerer Polykondensate, die vorstehend genannt sind, erfolgt über die gemeinsame Lösung dieser Polykondensate oder über deren Schmelze.

Überraschend wurde gefunden, daß durch eine spezielle Führung des Zweiphasengrenzflächenverfahrens bei der Herstellung der für die erfindungsgemäßen Folien einsetzbaren Polyestercarbonate mit relativen Viskositäten von 1,7-3,0, bevorzugt von 2,0-2,5 (gemessen bei c=5 g/l und 25° C in

Methylenchlorid) für Folien besonders geeignete Polyestercarbonate hergestellt werden können. Folien aus diesen Polyestercarbonaten zeigen insbesondere günstigere Reißdehnungen, höhere Streckverhältnisse beim Recken und weniger Abrisse bei hohen Streckverhältnissen als entsprechende, auf übliche Weise hergestellte Polyestercarbonate.

Die spezielle Führung des Zweiphasengrenzflächenverfahrens bei der Herstellung dieser besonders für Folien geeigneten Polyestercarbonate beinhaltet die Verwendung von drei aufeinander folgenden, die Durchmischung des Zweiphasengemisches bewirkenden Reaktoren, in denen die Polykondensationsreaktion kontinuierlich durchgeführt wird. Als Reaktoren können beispielsweise folgende, die Durchmischung des Zweiphasengemisches bewirkende Reaktoren eingesetzt werden: Rührbehälter, Schlaufenreaktoren, Rotor-Stator-Systeme, Düsenreaktoren und andere mehr.

In dem ersten Reaktor werden dabei die Diphenole, gelöst als Diphenolate in alkalisch wäßriger Phase, und die Säurechloride, gelöst in einem Chlorkohlenwasserstoff oder einem Gemisch von Chlorkohlenwasserstoffen, gleichzeitig und kontinuierlich eingespeist.

Bevorzugt werden Methylenchlorid/Chlorbenzol-Gemische, besonders bevorzugt Methylenchlorid als Lösemittel eingesetzt. Das aus dem ersten Reaktor kontinuierlich ausgetragene Zweiphasengemisch sowie Phosgen, gegebenenfalls Alkalilauge und gegebenenfalls zusätzliches Lösemittel, werden gleichzeitig kontinuierlich in einen zweiten

Reaktor eingespeist. Das aus dem zweiten Reaktor ausgetragene Zweiphasengemisch und gegebenenfalls weitere Alkalilauge werden kontinuierlich in einen dritten Reaktor eingespeist. Das kontinuierlich aus dem dritten Reaktor austretende Zweiphasengemisch wird getrennt, die organische Phase wird elektrolytfrei gewaschen und das Polyestercarbonat wird durch Sprühtrocknung, Eindampfextrusion, Fällung/Trocknung oder Ausdampfknetung gewonnen. Zumindest ein Teil des insgesamt eingesetzten Phosgens kann auch in den ersten Reaktor mit eingespeist werden. Der Katalysator kann in einen oder in mehrere der Reaktoren kontinuierlich eingespeist werden. Bevorzugt werden als Katalysatoren tertiäre Amine. Diese werden bevorzugt in den dritten Reaktor eingespeist. Gegebenenfalls eingesetzter Kettenbegrenzer kann in einen oder mehrere Reaktoren kontinuierlich eingespeist werden, bevorzugt wird er in den ersten Reaktor eingeführt.

Die Herstellung der erfindungsgemäß verwendbaren Extrusionsfolien aus den Polykondensaten erfolgt über die Schmelze der Polykondensate, z.B. über Schlitzdüsen oder auch über Ringdüsen, wie beim Blasformen.

Die Herstellung der bevorzugten erfindungsgemäß verwendbaren Gießfolien aus den Polykondensaten erfolgt über deren Lösung in organischen Lösemitteln. Geeignete Lösemittel sind insbesondere chlorierte Kohlenwasserstoffe, wie z.B. Methylenchlorid, Ethylenchlorid, Chloroform und Chlorbenzol, oder deren Gemische. Bevorzugt werden Methylenchlorid/Chlorbenzol-Gemische und insbesondere Methylenchlorid. Auch Zusätze von beispielsweise Methanol, Ethanol, Aceton, Toluol, Xylol, Ethylenglykol und seinen Mono- oder Diethern, Propylenglykol und seinen

0245689

Ethern, Glycerin, Laurylalkohol und seinen Estern oder Phthalsäureester können mitverwendet werden, wobei solche Zusätze wie beispielswiese Toluol, Ether des Propylenglykols oder Ethylenglykol bevorzugt sind.

Das Vergießen der Polykondensatlösungen zu Filmdicken von 0,1-800 µm, bevorzugt von 1-600 µm, besonders bevorzugt von 2-400 µm und ganz besonders bevorzugt von 4-200 µm kann auf Band- oder Trommelgießmaschinen mit bekannten Gießern, wie Abstreif-oder Druckgießern erfolgen. So können beispielsweise Methylenchlorid-Polykondensat-Lösungen auf temperierten Trommelwalzen vergossen werden, die matt oder poliert sein können und die im allgemeinen Temperaturen von 10-40$^0$ C aufweisen. Die Abdampfung des Methylenchlorids erfolgt größtenteils auf der Trommelwalze; Restlösungsmittel wird dann über weitere temperierte Walzen, im Umlufttrockner mit Hilfe von Heizflächen, wie IR-Strahleranordnungen, oder anderen Heizanordnungen auch bei höheren Temperaturen, z.B. von 80-150$^0$ C, entfernt. Restspuren Lösemittel können durch weiteres Tempern, gegebenenfalls bei noch höherer Temperatur entfernt werden. Die Foliengießgeschwindigkeiten können variiert werden und liegen im allgemeinen bei Trommelwalzen von 1-5 m Durchmesser bei 2-4000 m/sec., bevorzugt bei 20-2000 m/sec.

Die erfindungsgemäß verwendbaren Polykondensat-Gießfolien können auf technischen Reckeinrichtungen mono- oder biaxial verstreckt werden, wobei das monoaxiale Verstrecken in Längsrichtung, d.h. in Gießrichtung des Gießfilms bevorzugt ist. Dazu sind bekannte technische, mit temperierbaren Walzen ausgerüstete Reckmaschinen geeignet, wobei das Verstrecken in einer Einspaltreckung, d.h. zwischen einer beheizten Walze (1) mit der Einlaufgeschwindigkeit $V_1$ und einer beheizten Walze (2) mit der höchsten Temperatur, der sogenannten Recktemperatur und einer Auslaufgeschwindigkeit $V_2$ in einem Spalt von ca. 3 bis 10 mm Breite unter Variation des Reckverhältnisses $V_1 : V_2$ von 1:1,05 bis 1:3,5, vorzugsweise von 1:1,1 bis 1:3,0 und insbesondere von 1:1,2 bis 1:2,5 durchgeführt wird. Im allgemeinen ist eine dritte Walze mit niedrigerer Temperatur als der Recktemperatur zur Thermofixierung nachgeschaltet.

Ebenso kann der Reckprozeß in einer Mehrspaltstreckung durchgeführt werden, wobei Reckmaschinen mit mehreren angetriebenen Walzen unterschiedlicher Geschwindigkeit und Temperatur verwendet werden und innerhalb der Verstreckzonen nicht angetriebene beheizte Walzen zur Vergleichsmäßigung des Reckprozesses eingesetzt werden. Der Durchmesser der Walzen kann von z.B. 40 bis 300 mm variiert werden, wobei im allgemeinen die Oberfläche der Reckwalzen durch Strahlen aufgerauht ist oder Kunststoff- oder Keramik-beschichtete Walzen zur besseren Haftung verwendet werden. Die Temperatur der am höchsten beheizten Reckwalze wird als sogenannte Recktemperatur $T_R$ bezeichnet, die im Bereich von ca. 170 bis 330° C, vorzugweise von 190 bis 300° C variiert wird.

Durch das Verstrecken der erfindungsgemäß zu verwendenden Folien können eine ganze Reihe von Eigenschaften vorteilhaft verändert werden, so z.B. das Schrumpfverhalten bei höherer Temperatur, mechanische und elektrische Eigenschaften, z.B. Reißfestigkeit und Durchschlagsfestigkeit und andere mehr.

Gegenstand der Erfindung ist auch die Verwendung von 5-45 Gew.-%, bevorzugt 10-40 Gew.-% und besonders bevorzugt 20-35 Gew.-% Ruß oder Graphit enthaltenden Folien aus den beschriebenen Polykondensaten. Als Ruße sind erfindungsgemäß Gasruße, Furnace-Ruße oder Flammruße mit mittleren Primärpartikelgrößen, die im allgemeinen elektronenmikroskopisch ermittelt werden, von unter 200 Nanometer (nm), vorzugsweise unter 100 Nanometer (nm) und insbesondere mit einer mittleren Primärteilchengröße von kleiner als 50 Nanometer, geeignet. Geeignete Graphite sind Graphitpulver oder Graphitstäube, die beispielsweise in einem breiten Kernspektrum mit Partikeldurchmessern bis unter 100 µm, vorzugsweise unter 50 µm, zur Verfügung stehen, wobei Graphitpulver mit mittleren Teilchengrößen von unter 500 µm, vorzugsweise unter 100 µm, verwendet werden und die Graphitpartikel in der nachfolgend beschriebenen Weise in der Polykondensatlösung weiter zerkleinert und feinst dispergiert werden.

Bevorzugt werden bekannte, sogenannte Leitfähigkeitsruße verwendet, die außer einer sehr geringen Primärteilchengröße eine große äußere und innere Oberfläche, d.h. hohe Porosität und somit hohe BET-Oberflächen bei der $N_2$-Adsorption und hohe Dibutylphthalat (DBP)-Adsorptionswerte aufweisen und weiterhin hochstrukturiert sind, d.h. starke Agglomerationen oder Aggregationen von einzelnen Rußteilchen zu größeren Gebilden, wie z.B. Ketten, aufweisen, wobei die BET-Oberflächen der Ruße im allgemeinen größer sind als 20 $m^2$ und die DBP-Adsorptionen oberhalb von 40 ml pro 100 Ruß liegen.

Bevorzugt werden als Leitfähigkeitsruße Ruße mit BET-Oberflächen von über 50 $m^2/g$, besonders bevorzugt von über 100 $m^2/g$ und ganz besonders von über 500 $m^2/g$, insbesondere jedoch von über 800 $m^2/g$, und DBP-Adsorptionen von größer als 80 ml/100 g bei mittleren Primärpartikelgrößen von unter 50 Nanometer (nm). Derartige elektrisch leitfähige Ruße sind als handelsübliche Spezialruße mit ausgeprägten Strukturen und hohen elektrischen Leitfähigkeiten verfügbar.

Die Einarbeitung von Ruß oder Graphit in die Polykondensate erfolgt über Lösungen von Polykondensaten, entweder direkt nach Abschluß des Herstellungsprozesses des Polykondensates in die Reaktionslösungen oder nach erfolgter Isolierung des Polykondensates in die separat hergestellten Polykondensatlösungen, wobei die elektrisch leitfähigen Additive sowohl zunächst allein in geeigneten Medien vor dem Lösen der Polykondensate dispergiert oder vorzerkleinert als auch in Gegenwart des gelösten Polykondensats eingearbeitet und feindispergiert werden können. Es können auch beide Möglichkeiten kombiniert werden, wobei dann mit Vorteil eine stufenweise Feinstdispergierung unter Verwendung bekannter Dispergiereinrichtungen, wie z.B. Rotor-Stator-Apparate, Dissolver-Scheiben, Hochdruckhomogenisatoren, Ultra-Schallsonatoren oder Perlmühlen mit z.B. Stahlkugeln, von 0,5 bis 3 mm Durchmesser erreicht wird.

Geeignete Medien für die Herstellung der Dispersionen sind chlorierte Kohlenwasserstoffe wie beispielsweise Methylenchlorid, Ethylenchlorid, Chloroform oder Chlorbenzol, wobei allerdings auch Zusätze von beispielweise Methanol, Ethanol, Aceton, Toluol, Xylol, Ethylenglykol und seinen Mono- oder Diethern, Propylenglykol und seinen Ethern, Glycerin, Laurylalkohol und seinen Ethern und Estern oder Phthalsäureester mitverwendet werden können.

Die so hergestellten Dispersionen in den vorstehend genannten organischen Medien, die im allgemeinen Feststoffgehalte an Polykondensat und Ruß bzw. Polykondensat und Graphit von 4-25 Gew.-%, vorzugsweise von 6-18 Gew.-% enthalten, werden meist noch einer Feinfiltration mit mittleren Maschenweiten von unter 100 µm, vorzugsweise von unter 50 µm unterworfen, um Teilchenagglomerate zu entfernen.

Bei Verwendung von Ruß haben die so filtrierten Dispersionen im allgemeinen nur noch Teilchengrößen von weniger als 10 µm (Messung mittels Ultrazentrifuge oder Laserbeugung), vorzugweise von weniger als 5 µm.

Das Vergießen der Dispersionen zu Filmdicken von 1-600 µm, vorzugsweise von 2-400 µm und insbesondere von 4-200 µm kann auf Band- oder Trommelgießmaschinen mit bekannten Gießern wie Abstreif- oder Druckgießern erfolgen, wobei die hergestellten Polykondensatfilme einen Füllungsgrad von 5-45 Gew.-%, vorzugsweise 10 bis 40 Gew.-% und insbesondere 20 bis 35 Gew.-% (bezogen auf Gesamtfeststoff) besitzen. Die Abdampfung der Lösemittel aus den Gießfolien kann erfolgen, wie es oben für die ungefüllten vergossenen Polykondensatlösungen beschrieben ist. Auch die Foliengießgeschwindigkeiten können ähnlich liegen, wie oben für die ungefüllten Polykondensatlösungen beschrieben ist.

Ein weiterer Gegenstand dieser Erfindung ist die Verwendung von 5-45 Gew.-% Ruß oder Graphit enthaltenden Folien, die nicht nur durch Vergießen der oben beschriebenen Dispersionen und Abdampfen des Lösemittels erhalten werden, sondern die zusätzlich mono-oder biaxial um 5-200 % gereckt sind.

Überraschend wurde nämlich gefunden, daß die mit Ruß oder Graphit gefüllten erfindungsgemäß zu verwendenden Folien, die man nach bekannten Gießverfahren herstellt und anschließend nach bekannten Verfahren reckt, ein besonderes gutes Eigenschaftbild bezüglich elektrischer und mechanischer Eigenschaften aufweisen, wie z.B. geringere Veränderungen der spezifischen Widerstände mit der Lagerzeit im Vergleich zu den nicht gereckten rußgefüllten Gießfolien, außerdem geringere Dickenschwankungen, hohe Oberflächenglätte, gutes Schrumpfverhalten, sehr niedrige Lösungsmittelgehalte ohne zusätzliche separate Nachtrocknung und schließlich hohe Reißdehnung und Reißfestigkeit.

Die erfindungsgemäß verwendbaren gereckten, mit Ruß oder Graphit gefüllten Gießfolien sind damit den erfindungsgemäß verwendbaren ungereckten Gießfolien gleicher Dicke und gleicher Füllstoffgehalte überlegen, was vor allem im Hinblick auf Reißdehnung und Reißfestigkeit einerseits und Lagerzeitverhalten des spezifischen Oberflächenwiderstands andererseits von entscheidendem Vorteil ist.

Es war für den Fachmann nicht zu erwarten, daß vor allem bei Füllstoffgehalten von 10 und mehr Gewichtsprozent die Reckung zu Folien guter und reproduzierbarer Qualität, insbesondere im Bereich sehr geringer Foliendicken von beispielsweise unter 0,05 mm, führt, wobei besonders unerwartet ist, daß die Reißdehnung der gefüllten Folien durch die Reckung verbessert wird, während die Reckung von entsprechenden ungefüllten Folien eine Verringerung der Reißdehung verursacht.

Die für die Reckung eingesetzten, mit Ruß oder Graphit gefüllten erfindungsgemäß verwendbaren Folien können vor der Reckung noch einen Restlösemittelgehalt von 0,2-12 Gew.-%, vorzugsweise von 0,5-8 Gew.-% aufweisen. Der Restlösemittelgehalt kann durch Vortrocknung der vergossenen Dispersionen vor dem nachfolgenden Reckprozeß gezielt eingestellt werden. Die Reckung der mit Ruß oder Grahit gefüllten Folien kann erfolgen, wie oben für die ungefüllten Polykondensat-Gießfolien beschrieben.

Es wurde gefunden, daß sowohl die ungefüllten als auch die mit Ruß oder Graphit gefüllten erfindungsgemäß zu verwendenden Folien eine Reihe von überraschenden Eigenschaften aufweisen, die sie für spezielle Anwendungen besonders geeignet machen. Dies gilt schon für die Extrusionsfolien und gilt in besonderem Maße für die Gießfolien.

Elektrische Widerstandsfolien als Schreibbänder für sogenanntes non impact printing, das ein thermisches Aufzeichnungsverfahren darstellt, sind eine hervorragende Anwendungsmöglichkeit für die erfindungsgemäß verwendbaren Ruß oder Graphit, insbesondere Ruß enthaltenden Folien (electro thermal ribbon, ETR-Verfahren). Neben der hohen Oberflächengüte der Folien sind hier die hohe Wärmestandfestigkeit, die hohe Dimensionsstabilität, die geringe Klebneigung auch bei hohen Temperaturen, die außerordentlich gute Metallhaftung, z.B. bei Al-Bedampfung, die gute Mechanik sowie die hohe Abriebfestigkeit der Folien von Vorteil. Die erfindungsgemäß verwendbaren rußhaltigen Polykondensatfolien werden zur Verwendung als Schreibbänder mit verschiedenen Beschichtungen versehen (Metallbeschichtung, z.B. Al; schmelzbare Druckfarbenschicht; gegebenenfalls Isolationsschicht als weitere Widerstandsschicht), wie sie beispielsweise in den folgenden Druckschriften beschrieben sind:

US 4 308 318, EP 59 308
US 4 103 066, EP 116 313
US 4 320 170, EP 82 269
US 4 269 892, US 4 350 449
US 4 291 994, EP 76 892
EP 88 156.

Die für das ETR-Verfahren einsetzbaren rußhaltigen Polykondensatfolien weisen insbesondere Dicken von 1-100 µm, bevorzugt von 5-60 µm und besonders bevorzugt von 10-30 µm sowie insbesondere spezifische Oberflächenwiderstände von 50-5000 Ω, bevorzugt 100-1000 Ω auf. Der Einsatz der erfindungsgemäß verwendbaren rußhaltigen Folien aus Polykondensaten, wie sie oben definiert sind, für das ETR-Verfahren, führt zu hervorragenden Druckbildern.

Die erfindungsgemäß zu verwendenden Folien sind ebenfalls mit Vorteil als Schreibbänder für non impact printing, allerdings nach anderen Verfahren als dem ETR-Verfahren einsetzbar, und zwar nach dem TCR-Verfahren und ähnlichen Verfahren (thermal carbon ribbon, Thermoschmelztransferverfahren, Sublimationsdruckverfahren). Bei diesen thermischen Aufzeichnungsverfahren wird die Folie einseitig mit einer schmelzbare oder sublimierbare Druckfarbe enthaltenden Schicht oder mit einer aus schmelzbarer oder sublimierbarer Druckfarbe bestehenden Schicht beschichtet. Die zum Schmelzen der Druckfarbe notwendige Wärme wird nicht im Band selbst erzeugt, wie beim ETR-Verfahren (s.o.), sondern wird von einem Thermokopf, über den das Band geführt wird, auf das Band übertragen. Als Folge der

hervorragenden Oberflächengüte, der hohen Wärmeformbeständigkeit, der geringen bzw. fehlenden Klebneigung bei hohen Temperaturen, der vernachlässigbaren Wärmealterung, der guten Wickelbarkeit (Festigkeit und geringe Klebneigung, insbesondere einseitig matter Folie), der guten Abriebbeständigkeit und der guten Haftung der farbabgebenden Schicht ist die erfindungsgemäße Folie überraschend gut für das TCR-Verfahren als Schreibband geeignet. Das Schriftbild ist außerordentlich scharf und gleichmäßig. Bevorzugt werden Folienstärken von 1-30 µm, besonders bevorzugt von 2-15 µm, ganz besonders bevorzugt von 3-10 µm, für das TCR-Verfahren eingesetzt.

Die erfindungsgemäß zu verwendenden Folien eignen sich für die Herstellung von Schreibbändern aufgrund ihrer hohen und relativ konstanten Schlagzugzähigkeit; vgl. Beispiel 3. Diese Schreibbänder, die beispielsweise in Schreibmaschinen und Druckern eingesetzt werden können, zeigen auch bei hohen Beanspruchungen praktisch keine Abrisse mehr, wie sie bei anderen Bändern auftreten können. Infolgedessen brauchen die Bandspulen ebenso wie die Führung und der Weitertransport der Bänder beim Schreibvorgang technisch nicht außergewöhnlich anspruchsvoll gestaltet sein. Auch wird durch die verringerte Reißneigung der Bänder eine Mehrfachbenutzung möglich.

Die besondere Eignung der erfindungsgemäß zu verwendenden Folien tritt bei sehr dünnen Folien (Dicke beispielsweise 2 bis 15 µm), wie sie für thermische Aufzeichnungsverfahren gewünscht werden, und bei durch Füllstoffe elektrisch

leitfähig gemachten Folien (Dicke beispielsweise 10 bis 30 µm), wie sie für elektrothermische Aufzeichnungsverfahren gebraucht werden, besonders deutlich zutage, weil bei diesen Verfahren eine Reißempfindlichkeit besonders stark auffällt.

Die Prozentangaben der nachfolgenden Beispiele beziehen sich - wenn nicht anders angegeben - auf das Gewicht.

Beispiel 1: Eigenschaften von Folien aus BPA/TER/ISO-Polyestercarbonaten mit 74 Mol-% Polyesteranteil und einem Verhältnis Terephthalat-/Isophthalat-Einheiten von 1/1

Aus 2,2-Bis-(4-hydroxyphenyl)-propan, Terephthalsäuredichlorid, Isophthalsäuredichorid, Phosgen und p-Isooctylphenol als Kettenbegrenzer wurde nach dem oben beschriebenen kontinuierlichen Zweiphasengrenzflächenverfahren ein Polyestercarbonat mit 74 Mol-% Polyesteranteil, 26 Mol-% Polycarbonatanteil und einem Verhältnis von Terephthalat-/Isophthalat-Einheiten von 1/1 hergestellt (APE 74 K). Die relative Viskosität betrug 2,03 (gemessen in Methylenchlorid bei c = 5 g/l und 25°C), der Na-Gehalt (aus nicht vollständig ausgewaschenen Salzen) betrug 12 ppm, die Glasübergangstemperatur betrug 198°C (gemessen durch Differentialthermoanalyse).

Für Vergleichszwecke wurde ein Polyestercarbonat gleicher Zusammensetzung diskontinuierlich nach dem Zweiphasengrenzflächenverfahren hergestellt (APE 74 D). Dieses wies eine relative Viskosität von 2,09 auf (gemessen wie oben).

Das APE 74 K und das APE 74 D wurden unter gleichen Bedingungen aus ihren Methylenchloridlösungen zu 12 µm dicken Folien vergossen und anschließend bei Recktemperaturen von 215°C verstreckt, wie oben beschrieben.

Beim APE 74 D wurde an der 12 µm-Folie (unverstreckt) eine Reißdehnung von 83 % gemessen. Das maximale Reckverhältnis betrug 1/1,9.

Beim APE 74 K wurde an der 12 µm-Folie (unverstreckt) eine Reißdehnung vo 114 % gemessen. Das maximale Reckverhältnis betrug 1/2,3.

Überraschend ist die besonders hohe Wärmestandfestigkeit der Folien aus Polyestercarbonaten hoher relativer Viskositäten (so z.B. bei APE 74 K, Tg = 198° C).

Beispiel 2: Rußgefüllte APE 74 K-Folien

Auf die im folgenden beschriebene Weise wurden die in der nachfolgenden Tabelle aufgeführten rußhaltigen Folien mit den Versuchsnummern 1-11 hergestellt. Als Polyestercarbonat zur Herstellung der Folien wurde das in Beispiel 1 beschriebene APE 74 K eingesetzt. Als Leitfähigkeitsruße dienten erstens ein Ruß mit einer BET-Oberfläche von 254 $m^2$/g und einer DBP-Adsorption von 178 ml/110 g (Vers. Nr. 1-5) und zweitens ein Ruß mit einer BET-Oberfäche von 1000 $m^2$/g und einer DBP-Adsorption von 400 ml/100 g (Vers. Nr. 6-11).

In den Versuchen Nr. 1-5 wurde der Ruß 6-9 %ig, in den Versuchen Nr. 6-11 wurde er 2-4 %ig in Methylenchlorid vordispergiert. Der Polyester APE 74 K wurde dann in Form einer 10 %igen Lösung in Methylenchlorid in die Rußdispersion eingsprüht. Die erhaltenen, Ruß eindispergiert enthaltenden Polyestercarbonatlösungen wurden dann nachdispergiert und nach Filtration über ein 50 µm-Polyamidgewebe und Voreindampfung zu Dispersionen mit Viskositäten von 8000-12 000 mPa.s zu Polyestercarbonatfilmen auf einer Trommelgießmaschine vergossen und nachgetrocknet (Restlösemittelgehalt VDE 0345, 1/2 Stunde 160°C : < 1 %). Die Eigenschaften der erhaltenen Folien sind in Tabelle aufgeführt.

Ein Teil der in der Tabelle aufgeführten Folie mit der Versuchsnummer 10 wurde vor der Endtrocknung (Restlösemittelgehalt 4 %) weiterverarbeitet. Sie wurde auf einer Einspaltreckmaschine mit einem Reckverhältnis 1/1,5 verstreckt, wie es im Text dieser Anmeldung beschrieben ist. Die mechanische Prüfung der erhaltenen Folie ergab, daß die mechanischen Werte nach der Verstreckung der Folie beträchtlich verbessert sind. So wird die Reißfestigkeit von 65 $N/mm^2$ (s. Tab., Vers.-Nr. 10) auf 72 $N/mm^2$ und die Reißdehnung von 4,8 % (s. Tab., Vers.-Nr. 10) auf 15,3 % angehoben. Weiterhin wird durch die Verstreckung der Oberflächenwiderstand von 123 Ω auf 264 Ω angehoben.

Die Tabelle zeigt, daß durch Einarbeitung von Ruß in Polyestercarbonate Folien mit interessanten Eigenschaften erhalten werden können. So können die Folien z.B. bei guten mechanischen Eigenschaften sehr geringe Oberflächen- und Durchgangswiderstände erreichen. Diese Widerstände können durch Variation des Rußanteils, der Folienstärke, der Ruß-BET-Oberfläche und des Verstreckungsgrades überraschend stark variiert werden. Von Vorteil ist, daß durch die jeweils passende Wahl der Art der Variation für den jeweiligen Anwendungszweck eine besonders günstige Lösung gefunden werden kann. Ein

weiterer Vorteil der rußgefüllten erfindungsgemäßen Folien ist ihre überraschend höhere Wärmestandfestigkeit gegenüber nicht rußgefüllten erfindungsgemäßen Folien. So wird z.B. bei 28 Gew.-% Rußfüllung eine bis über 10°C höhere Wärmestandfestigkeit erreicht.

T a b e l l e: Eigenschaften rußgefüllter APE 74-K-Folien

| Vers.-Nr. | Leitfähigkeitsruß | | Folienstärke | Folieneigenschaften | | | |
|---|---|---|---|---|---|---|---|
| | BET-Oberfläche ($m^2/g$) | Anteil (%) | (µm) | spez. Oberflächenwiderstand (Ω) | Durchgangswiderstand (Ω.cm) | Reißfestigkeit ($N/mm^2$) | Reißdehnung % |
| 1 | 254 | 15,2 | 30 | 300 000 | 950 | - | - |
| 2 | 254 | 20,3 | 30 | 8 060 | 24 | 66 | 10,3 |
| 3 | 254 | 20,3 | 18 | 18 670 | 34 | - | - |
| 4 | 254 | 28,5 | 30 | 558 | 1,7 | 64 | 7,4 |
| 5 | 254 | 28,5 | 15 | 1 592 | 2,7 | - | - |
| 6 | 1000 | 15,8 | 25 | 1 120 | 2,7 | 65 | 7,8 |
| 7 | 1000 | 15,8 | 13 | 2 183 | 2,7 | 68 | 7,9 |
| 8 | 1000 | 20,5 | 26 | 435 | 1,0 | - | - |
| 9 | 1000 | 20,5 | 14 | 910 | 1,2 | 70 | 6,6 |
| 10 | 1000 | 28,0 | 28 | 123 | 0,35 | 65 | 4,8 |
| 11 | 1000 | 28,0 | 14 | 266 | 0,36 | 60 | 3,8 |

Diese Tabelle dient in erster Linie dazu, die durch Ruß erhöhte Leitfähigkeit zu demonstrieren. Da der Ruß mittels eines Labordispergierverfahrens verteilt wurde, liegen die Reißfestigkeits- und Reißdehnungswerte beträchtlich unter den in der Praxis erreichbaren Werten.

## Beispiel 3

Schlagzugzähigkeit $a_{zn}$ von verstreckten 6 µm-Folien aus dem Polyestercarbonat APE 74 K des Beispiels 1. Als Vergleich dienten verstreckte 6 µm-Folien aus Bisphenol-A-Polycarbonat (PC), Polyethylenterephthalat (PET) und Polysulfon (PSU) (auf Basis von Bisphenol-A und Dichlordiphenylsulfon)

Einzelwerte (E) und Mittelwerte (MW) der Schlagzugzähigkeit $a_{zn}$ [cm kp/cm²]

| E bzw. MW | APE 74 K | PC* (Vergleich) | PET* (Vergleich) | PSU* (Vergleich) |
|---|---|---|---|---|
| E | 1810 | 2170 | 170 | 171 |
| E | 1980 | 730 | 980 | 352 |
| E | 1630 | 1590 | 430 | 96 |
| E | 1900 | 3050 | 1310 | 58 |
| E | 2110 | 1830 | 820 | 130 |
| E | 1550 | 510 | 1580 | 217 |
| E | 1730 | 890 | 210 | 328 |
| E | 1680 | 2100 | 470 | 138 |
| E | 2050 | 2630 | 190 | 295 |
| E | 1720 | 1280 | 580 | 398 |
| MW | 1816 | 1678 | 674 | 218 |

*PC $\eta_{rel}$ = 2,059 (gemessen in $CH_2Cl_2$, bei 25° C, c = 5 g/l)

*PET $\eta_{rel}$ = 1,471 (gemessen in Phenol/o-Dichlorbenzol 1/1, bei 25° C, c = 5 g/l)

*PSU $\eta_{rel}$ = 1,263 (gemessen in $CH_2Cl_2$, bei 25° C, c = 5 g/l)

* = für Folienherstellung typische Materialien.

Die Schlagzugzähigkeit der erfindungsgemäß verwendbaren Folie aus aromatischem Polyestercarbonat zeigt einen besonders hohen Mittelwert. Dieser wird mitbedingt durch die relativ geringen Abweichungen vom Mittelwert. Besonders deutlich wird dies im Vergleich mit der Polycarbonatfolie, deren Schlagzugzähigkeiten in einzelnen Fällen hoch sind, jedoch von Fall zu Fall größeren Schwankungen unterliegen.

Patentansprüche

1. Verwendung von Folien aus Polykondensaten für die Herstellung von Schreibbändern,

dadurch gekennzeichnet, daß die Polykondensate 75-100 Mol-% bifunktionelle Struktureinheiten der Formeln (1) und gegebenenfalls (2)

(1) 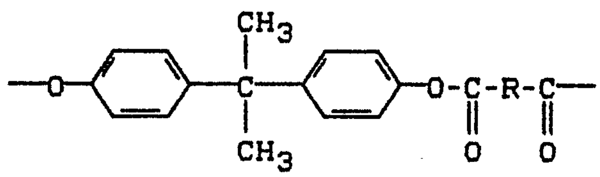

(2) 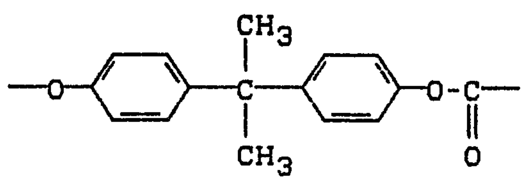

und 25-0 Mol-% bifunktionelle Struktureinheiten der Formeln (3) und gegebenenfalls (4)

(3) 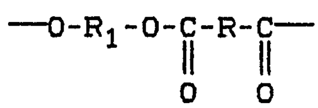

(4) 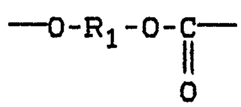

enthalten,

wobei die Säurereste -CO-R-CO- in den Formeln (1) und (3) 75-100 Mol-% Tere- und/oder Isophthalsäurereste

0245689

und zu 25-0 Mol-% Reste anderer aromatischer Dicarbonsäuren und die Reste $-O-R_1-O-$ in den Formeln (3) und (4) Reste anderer Diphenole als die in den Formeln (1) und (2) enthaltenen Reste des 2,2-Bis-(4-hydroxyphenyl)-propans bedeuten,

und das Molverhältnis Ester- zu Carbonatgruppen in den Polykondensaten 100/0 bis 10/90 beträgt.

2. Verwendung nach Anspruch 1, dadurch gekennzeichnet, daß die Polykondensate Polyestercarbonate mit einem Molverhältnis Ester-/Carbonatgruppen 95/5-10/90 und einer relativen Viskosität von 1,7-3,0 (gemessen bei c = 5 g/l und 25°C in Methylenchlorid) sind und nach einem kontinuierlichen Zweiphasengrenzflächenverfahren hergestellt werden, <u>bei dem</u>

1. die Diphenole, gelöst als Diphenolat in alkalisch wäßriger Phase, die Säurechoride, gelöst in einem Chlorkohlenwassertoff oder einem Gemisch von Chlorkohlenwasserstoffen, und gegebenenfalls Phosgen gleichzeitig und kontinuierlich in einem ersten, Durchmischung bewirkenden Reaktor eingespeist werden,

2. das kontinuierlich aus dem ersten Reaktor ausgetragene Zweiphasengemisch sowie Phosgen und gegebenenfalls Alkalilauge und gegebenenfalls

weiteres organisches Lösemittel kontinuierlich in einen zweiten, Durchmischung bewirkenden Reaktor eingespeist werden,

3. das kontinuierlich aus dem zweiten Reaktor ausgetragene Zweiphasengemisch und gegebenenfalls weitere Alkalilauge kontinuierlich in einen dritten, Durchmischung bewirkenden Reaktor eingespeist werden,

4. das kontinuierlich aus dem dritten Reaktor ausgetragene, ausreagierte Zweiphasengemisch in die organische und die wäßrige Phase aufgetrennt werden, die organische Phase elektrolytfrei gewaschen wird und aus der organischen Phase das Polyestercarbonat gewonnen wird, und

5. in mindestens einen der Reaktoren kontinuierlich Katalysator und gegebenenfalls Kettenbegrenzer mit eingespeist werden.

3. Verwendung nach Ansprüchen 1 und 2, dadurch gekennzeichnet, daß die Polykondensate 5-45 Gew.-% Ruß oder Graphit eingemischt enthalten.

4. Verwendung nach Anspruch 3, dadurch gekennzeichnet, daß die Folien mono- oder biaxial um 5-200 % gereckt sind.

5. Verwendung nach Ansprüchen 1 bis 4 für Schreibbänder für thermische und elektrothermische Aufzeichnungsverfahren.